# EUROPEAN PATENT APPLICATION

(11) **EP 1 452 258 A1**
(43) Date of publication of application: **01.09.2004**
(21) Application number: 03004583.5
(22) Date of filing: 28.02.2003
(51) Int. Cl.: B23D 63/18

(54) **Circular saw blade straightening machine**

(71) Applicant: Oppliger, Walter, 3661 Uetendorf (CH)
(72) Inventor: Oppliger, Walter, 3661 Uetendorf (CH)
(74) Representative: Braun, André, jr.

(57) **Abstract**

Circular saw blades are treated in a straightening machine for eliminating unevennesses in the saw blades. The machine is provided with rollers(14, 14', 17, 14') for straightening uneven sections of the saw blade (1). The straightening rollers are arranged with their axes perpendicular to a radius of the saw blade, and are running along radial tracks according to a relative movement between the saw blade and the rollers.

## Description

The invention relates to a circular saw blade straightening machine for eliminating unevennesses in circular saw blades, comprising rollers for straightening uneven sections of the saw blade.

When circular saws are used in woodworking, unevennesses occur on the saw blades; after only a few hours of use, these unevennesses can assume proportions that greatly impair the performance of the circular saw. Circular saw blades
therefore have to be straightened at regular intervals, i.e. unevennesses have to be eliminated.

A straightening machine for this purpose is described in EP-B-521 824. The straightening rollers for flattening unevennesses directed towards the different sides of the saw blade run on axes being parallel to a radius of the saw blade. Thus the straightening rollers treat the saw blade along circular tracks, whereby the diameter of the track depends on the distance of the rollers from the hub or the centre of the blade.

It has turned out that while this prior art machine is very effective in eliminating most of the unevennesses, it still leaves the blades with certain unbalance which is undesirable.

The object of the invention is to propose a circular saw blade straightening machine which is capable of an improved treatment of the saw blade.

This is achieved according to the invention by a straightening machine of the type mentioned at the outset which is distinguished by the features defined in the Claims.

An embodiment of the invention is described below with the aid of the accompanying drawing, in which:
- Fig. 1: is a front view of the saw blade and straightening rollers of an embodiment of the machine, and
- Fig. 2: is a side view of the embodiment of Fig. 1
- Fig. 3: is a front view of an alternative embodiment of the machine, and
- Fig. 4: is a side view of the embodiment of Fig. 3

In the following description the content of EP-B-0 521 824 is incorporated herein by reference. Design details known from said patent description are not repeated here.

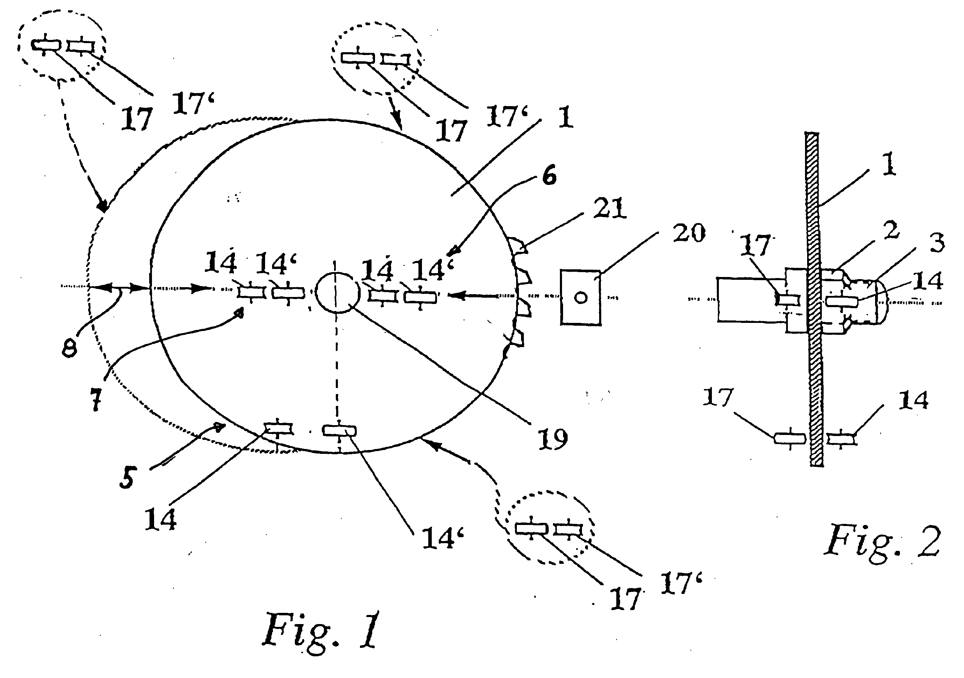

Fig. 1 shows a saw blade 1 with teeth 21, a hub 2 and a shaft 3. A first pair of straightening rollers consisting of a concave convex roller 14 and a convex roller 14' is seen in three different positions. Another pair of rollers 17 and 17' is positioned at the backside the saw blade exactly opposite the first pair of rollers. Opposite the concave roller 14 is a convex roller 17 and opposite the convex roller 14 is a concave roller 17'.

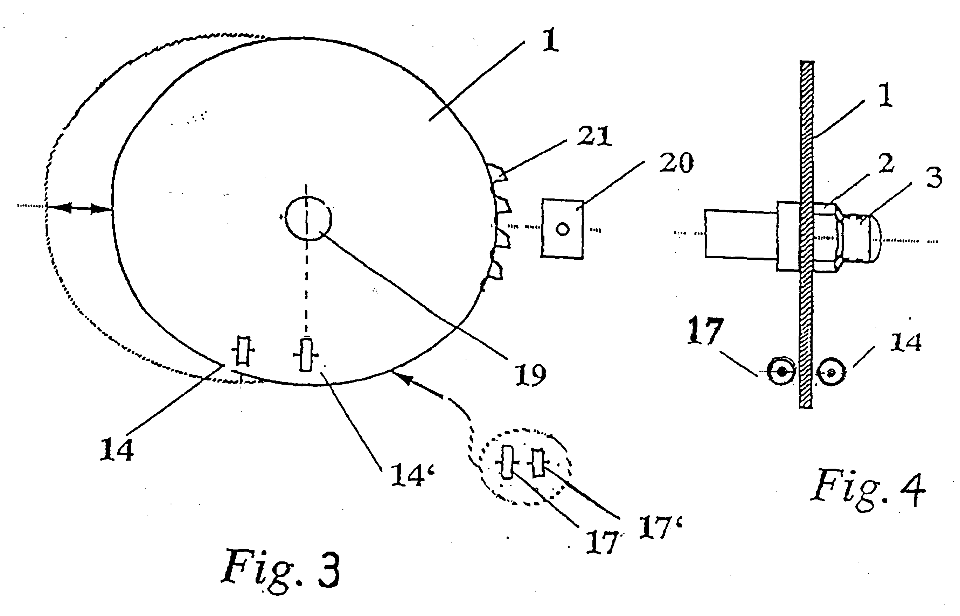

The rollers 17 and 17' on the rear side are shown in Figs. 1 and 3 next to the saw blade, the arrow indicating that they are located on that side of the saw blade which is not visible in Figs. 1 and 3.

The two pairs of rollers are arranged in a roller block in laterally rigid positions relative to each other but are provided with hydraulic means to be pressed from both sides against the saw blade. The hydraulic means are known as such and are not shown for clarity reasons. In an alternative embodiment of the invention it is of course possible, to use pneumatic means or other mechanical means instead of hydraulic means.

As known from the prior art device, if in position 5 the rollers 14 and 17 are pressed against the blade they are flattening out dents projecting towards the front of the blade. In the same position of the rollers but with the saw blade shifted to the side as indicated by the arrows 8 the rollers 14' and 17' flatten dents towards the rear side of the blade.

Accordingly, the saw blade is moved linearly between the two positions for the smoothing of the front side and the rear side. This takes place in such a way that first one side, for example the front side, is completely smoothed and then the saw blade is moved and the whole of the rear side is treated. Alternatively, the saw blade can be treated in such a way that each track is straightened on the front and rear sides before the next track is treated. In this case the saw blade is moved between the two positions for each track.

A commercially available laser instrument 20 is provided for measuring purposes. Before the treatment is started, the laser reference line is aligned precisely with the centre of the saw blade. The laser travels as close as possible to the hub 2 and establishes a zero reference for level. It then travels to the tooth base of the saw blade 1 and establishes the distance to the tooth base in relation to this zero reference.

The roller block as a whole is capable of being shifted to a position 6 to the right of the hub and to a position 7 to the left of the hub. In these two positions the axes 13 and 13' of the rollers are no longer parallel but perpendicular to a respective radius of the saw blade. If in these positions the rollers are pressed against the blade and the blade is moved according to the arrows, the blade is treated along a radial track. To press a radial line away from the front side the rollers 14' and 17' in position 7 are activated, because these rollers can come closer to the hub. To press radial lines towards the front the rollers 14 and 17 in position 6 are used.

For the treatment along radial tracks the angular position of significant dents is determined. This angular position corresponding to a defined radial line of the saw blade is then brought in line with the intended track under the rollers in positions 6 and/or 7.

Depending on the shape and size of the dents the treatment may be effected in one position 6 or 7 and the blade may be turned in angular steps between subsequent tracks. Another possibility is to alternate between positions 6 and 7 for each subsequent track.

In the embodiment according to Figs. 3 and 4 the roller block is not moved as a whole to positions 6 or 7 but the rollers are individually turned by 90°. For rolling the individual tracks the rollers are radially advanced. For changing between the rollers 14, 17 and 14', 17,' the blade is shifted according to arrows 8.

## Claims

1. Method of treatment of circular saw blades with a straightening machine for eliminating unevennesses in circular saw blades, comprising rollers for straightening uneven sections of the saw blade, **characterised in that** the straightening rollers are arranged with their axes perpendicular to a radius of the saw blade, and are running along a radial track according to a relative movement between the saw blade and the rollers.

2. Circular saw blade straightening machine for eliminating unevennesses in circular saw blades, comprising rollers for straightening uneven sections of the saw blade, **characterised in that** straightening rollers (14, 14', 17, 17') for flattening unevennesses directed towards the different sides of the saw blade (1) are arranged with their axes perpendicular to a radius of the saw blade, and are running along a radial track according to a relative movement between the saw blade and the rollers.

3. Circular saw blade straightening machine according to Claim 1, **characterised in that** a laser instrument 20 is provided for measuring the unevennesses.
